# EUROPÄISCHE PATENTSCHRIFT

(11) **EP 2 509 742 B1**
(45) Veröffentlichungstag und Bekanntmachung des Hinweises auf die Patenterteilung: **01.05.2013**
(21) Anmeldenummer: 10785359.0
(22) Anmeldetag: 03.12.2010
(51) Int. Cl.: B23K 26/24

(54) **VERFAHREN ZUM VERSCHWEIßEN VON ZWEI METALLBAUTEILEN**
METHOD FOR WELDING TWO METAL COMPONENTS
PROCÉDÉ POUR SOUDER DEUX COMPOSANTS MÉTALLIQUES

(30) Priorität: 11.12.2009 DE 102009057997
(43) Veröffentlichungstag der Anmeldung: 17.10.2012
(73) Patentinhaber: Daimler AG, 70327 Stuttgart (DE)
(72) Erfinder: BECKER, Wolfgang, 89081 Ulm (DE); BECK, Markus, 89275 Elchingen (DE); GEYER, Markus, 27419 Sittensen (DE); GOETTSCH, Ulix, 72644 Oberboihingen (DE); GOTH, Klaus, 71067 Sindelfingen (DE); GREF, Wolfgang, 70563 Stuttgart (DE); REINIGER, Claus-Dieter, 73779 Deizisau (DE)
(74) Vertreter: JENSEN & SON
(86) Internationale Anmeldenummer: PCT/EP2010/007348
(87) Internationale Veröffentlichungsnummer: WO 2011/069621

(56) Entgegenhaltungen:
- EP-A1- 1 747 836
- US-A- 5 879 416
- US-A1- 2004 099 644

## Beschreibung

Die Erfindung betrifft ein Verfahren zum Verschweißen von zwei Metallbauteilen gemäß dem Oberbegriff von Patentanspruch 1.

Ein gattungsgemäßes Verfahren ist durch die US 2005/0028897 A1 offenbart. In ihr beschrieben ist ein Verfahren zum Vermeiden von Rissen beim Schweißen, beim Reparaturschweißen oder beim Plattinieren von Teilen, die aus metallischen Legierungen bestehen und heißrissanfällig sind. Bei dem Verfahren wird eine erste Wärmequelle auf die Teile gerichtet und ein Schmelzbereich ausgebildet, wobei die Wärmequelle und die Teile relativ zueinander bewegt werden. Des Weiteren ist eine zweite, zusätzliche Wärmequelle vorgesehen, die auf die Teile gerichtet wird und der ersten Wärmequelle in einem Abstand mit der gleichen Geschwindigkeit und in der gleichen Richtung folgt, wobei die Abkühlrate eines Verfestigungsbereichs des Schmelzbereichs reduziert wird, und zwar ohne den Verfestigungsbereich aufzuschmelzen. Dadurch sollen Spannungsbelastungen vermieden oder sogar erzeugt werden, um eine Bildung von Heißrissen zu vermeiden.

Die EP 1 747 836 A1 offenbart ein Verfahren zum Verschweißen von Metallteilen, wobei ein Schweißlaserstrahl eines Lasers auf die Metallteile fokussiert wird. Die Metallteile werden durch den Schweißlaserstrahl unter Ausbildung einer Schweißnaht zusammengeschweißt. Anschließend wird eine Wärmebehandlung der Schweißnaht vorgesehen, wobei die Wärmebehandlung von einem Laserstrahl durchgeführt wird. Das Verfahren soll dabei eine Gefügeumwandlung des Werkstoffs der Metallteile infolge des Verschweißens dieser im Bereich der Schweißnaht wieder rückgängig machen.

Die bekannten Verfahren weisen dabei allesamt den Nachteil auf, dass die Oberflächentopografie der entstehenden Schweißnaht Nahtüberhöhungen aufweisen und/oder sehr scharfkantig sein kann. Dies ist insbesondere dann der Fall, wenn die zu verschweißenden Metallbauteile aus Aluminiumlegierungen bestehen, insbesondere dann wenn zumindest einer der Fügepartner aus einer Aluminiumlegierung der Serie 5000 oder 7000 ausgebildet ist. Die entsprechenden Verschweißbereiche der Teile sind dadurch für bestimmte Funktionen, zum Beispiel für das Aufbringen von Dichtungen oder Leisten, nicht mehr geeignet. Zudem besteht eine Verletzungsgefahr bei nachfolgenden manuellen Montageoperationen.

Es ist daher Aufgabe der vorliegenden Erfindung, ein Verfahren zum Verschweißen von Metallbauteilen bereitzustellen, welches eine hohe Funktionalität des Verschweißbereichs ermöglicht.

Diese Aufgabe wird durch ein Verfahren zum Verschweißen von zwei Metallbauteilen mit den Merkmalen des Patentanspruchs 1 gelöst. Vorteilhafte Ausgestaltungen mit zweckmäßigen und nicht-trivialen Weiterbildungen der Erfindung sind in den abhängigen Ansprüchen angegeben.

Ein Verfahren zum Verschweißen von zwei Metallbauteilen aus Aluminiumlegierungen weißt einen ersten Schritt auf, bei dem die zu fügenden Metallbauteile in einem Verschweißbereich durch einen Energieeintrag mittels eines Laserstrahls unter Ausbildung einer Schweißnaht aufgeschmolzen werden. Erfindungsgemäß ist nun ein weiterer Schritt vorgesehen, bei dem die Oberfläche der Schweißnaht durch einen weiteren Energieeintrag unter teilweisem Aufschmelzen der Schweißnaht im Bereich der Oberfläche geglättet wird, wobei der weitere Energieeintrag mittels eines defokussierten Laserstrahls durchgeführt wird, dessen Brennpunkt in Strahlrichtung vor oder hinter der Oberfläche der Schweißnaht positioniert wird und wobei der defokussierte Laserstrahl und die Flächennormale einer Oberfläche der zwei Metallbauteile, auf welche der Laserstrahl auftrifft, einen Winkel von größer oder gleich 5 Grad einschließen.

Durch dieses zumindest bereichsweise Wieder-Aufschmelzen und Glätten der Oberfläche wird die Schweißnaht oberflächlich umgeschmolzen, woraus ein Abbau der eingangs genannten, einzelnen Erhebungen resultiert. Die Topografie der Schweißnaht ist nun nicht mehr scharfkantig sondern viel glatter, wodurch die zwei Metallbauteile in dem Verschweißbereich eine sehr hohe Funktionalität aufweisen, um beispielsweise dort Dichtungen vorsehen zu können.

Dies bedeutet eine Darstellung einer sehr guten Oberflächengüte in dem Verschweißbereich, was mit einer hohen Funktionalität desselbigen einhergeht. Die so geschaffene hohe Oberflächengüte des Verschweißbereichs erlaubt ebenso wie die nicht verschweißten Oberflächen der Metallbauteile beispielsweise ein Aufbringen von Dichtungen oder Leisten, die ohne das Glätten der Schweißnaht durch die scharfkantige Topografie beschädigt werden würden.

Der weitere Energieeintrag mittels eines defokussierten Laserstrahls, dessen Brennpunkt in Strahlrichtung vor oder hinter der Oberfläche der Schweißnaht positioniert wird, erlaubt eine präzise sowie schnelle Prozessführung, was mit einer hohen Qualität bei gleichzeitig geringen Kosten für das erfindungsgemäße Verfahren einhergeht. Bei dem defokussierten Laserstrahl kann es sich beispielsweise um den Laserstrahl eines Lasers handeln, mittels welchem schon die Metallbauteile in dem Verschweißbereich aufgeschmolzen werden. Ebenfalls kann vorgesehen sein, dass es sich bei dem defokussierten Laserstrahl um den Laserstrahl eines weiteren Lasers handelt, der beispielsweise dem ersten Laserstrahl in einem gewissen Abstand nachgeführt wird.

Erfindungsgemäß schließen der defokussierte Laserstrahl und die Flächennormale einer Oberfläche der zwei Metallbauteile, auf welche der Laserstrahl auftrifft, also die Oberfläche, in welche die Schweißnaht eingebracht wird, einen Winkel ein, der mindestens 5° beträgt, wodurch eine Beschädigung der Optik durch von der Bauteiloberfläche rückreflektierte Laserstrahlung vermieden wird.

Eine von dem defokussierten Laserstrahl mit energiebeaufschlagte Fläche ist beispielsweise 4 bis 16 mal, insbesondere 9 mal, größer als eine Fläche, die von dem fokussierten Laserstrahl zum Verschweißen der zwei Metallbauteile mit Energie beaufschlagt wird. Dies ermöglicht einen spezifischen Energieeintrag, also einen Energieeintrag pro Fläche, der groß genug ist, die Schweißnaht teilweise wieder aufzuschmelzen und somit die Oberfläche der Schweißnaht zu glätten, ohne die Schweißnaht wieder komplett aufzuschmelzen.

Bei Überfahrt des defokussierten Laserstrahls über die Schweißnaht sind die Prozessparameter dabei so zu wählen, dass genügend Energie für das teilweise Wieder-Aufschmelzen der Schweißnaht absorbiert wird.

Werden durch das erfindungsgemäße Verfahren zwei Metallbauteile verschweißt, welche aus Aluminiumlegierungen bestehen, so sind Oberflächen dieser Aluminiumlegierungen für die Wellenlänge von Festkörperlasern besonders reflektiv, weswegen eine Gefahr der Zerstörung der Optik oder des Lichtleitkabels durch von der Bauteiloberfläche rückreflektierte Stahlung immanent ist. Diese Gefahr ist insbesondere bei dem defokussierten Laserstrahl gegeben, da dieser auch auf sich unmittelbar an die Schweißnaht anschließende, glatte Bereiche auftrifft, die den Laserstrahl reflektieren können. Zur Vermeidung der Zerstörung schließt also der defokussierte Laserstrahl mit der Flächennormalen einen Winkel ein, der größer oder gleich 5° beträgt.

An dieser Stelle sei angemerkt, dass eine Energieverteilung des defokussierten Laserstrahls zumindest im Wesentlichen einer Gausverteilung gehorcht, was bedeutet, dass in äußeren Bereichen der mittels des Laserstrahls mit Energie beaufschlagten Fläche eine geringere Energiedichte vorliegt als in inneren Bereichen dieser Fläche.

Eine Überfahrt der Schweißnaht mit dem defokussierten Laserstrahl, also eine so genannte defokussierte Überfahrt, kann beispielsweise dann erfolgen, so lange die Schweißnaht beziehungsweise der Verschweißbereich noch warm ist. Ebenso möglich ist die defokussierte Überfahrt auch dann, wenn die Schweißnaht beziehungsweise der Verschweißbereich bereits, beispielsweise auf Umgebungstemperatur, abgekühlt ist. In jeglicher Hinsicht kann die defokussierte Überfahrt unmittelbar in Rückrichtung, also in entgegengesetzter Richtung zur Ausbildung der Schweißnaht erfolgen.

Durch die defokussierte Überfahrt sind insbesondere unregelmäßige und scharfkantige Erhebungen, ein Endkrater sowie eine Nahtüberhöhung der Schweißnaht zu glätten.

Die besagte Nahtüberhöhung liegt dabei im Anfangsbereich der Schweißnaht und entsteht derart, dass der Laserstrahl zu Beginn des Ausbildens der Schweißnaht auf die entsprechende Oberfläche des Metallbauteils trifft, das Metall aufschmilzt und sogar verdampft. Die dabei entstehende Dampfkapillare (Keyhole) wird in die entsprechende, gewünschte Richtung zum Ausbilden der Schweißnaht losgeführt. Aufgrund der Materialverdrängung durch die Dampfkapillare und aufgrund der der Schweißrichtung entgegengesetzten Umströmung des aufgeschmolzenen Metalls um die Dampfkapillare herum entsteht eine Nahtüberhöhung am Nahtanfang. Diese Nahtüberhöhung ist durch den defokussierten Laserstrahl zu glätten, wobei bei der defokussierten Überfahrt beispielsweise in Rückrichtung der Laserstrahl über den Nahtbeginn, also den Anfangsbereich der Schweißnaht, hinaus geführt wird, um eben die Nahtüberhöhung zuverlässig zu glätten.

Der besagte Endkrater liegt dabei in dem der Nahtüberhöhung gegenüberliegenden Endbereich der Schweißnaht und ist ebenso durch die defokussierte Überfahrt zu glätten. Der Endkrater wird dabei mit aufgeschmolzenem Metall aufgefüllt und eingeebnet.

An dieser Stelle sei angemerkt, dass das erfindungsgemäße Verfahren beispielsweise im Rahmen eines Remote-Laserstrahl-Schweißverfahrens eingesetzt werden kann, bei welchem es sich um einen robotergeführten Schweißprozess handelt.

Bei dem Remote-Laserstrahl-Schweißverfahren handelt es sich um ein Schweißverfahren, bei welchem der Laserstrahl aus größerem Abstand auf die entsprechende Oberfläche der Metallbauteile gerichtet und geschossen wird, wobei der Laserstrahl auch durch einen Scanner auf der Oberfläche geführt und an die entsprechenden, gewünschten Stellen gelenkt wird. In einem Schweißkopf der Schweißvorrichtung sind Spiegel des Scanners angeordnet, die eine Feinjustierung des Laserstrahls bewirken und diesen an die gewünschten Stellen lenken.

Der Scanner wiederum ist an einem Roboterarm gehalten, welcher den Scanner bewegt, wobei diese Bewegung des Scanners durch den Roboterarm grober erfolgt als die besagte Feinjustierung des Laserstrahls mittels des Scanners und dessen Spiegel.

Zudem ist die Führung und eine Umlenkung des Laserstrahls mittels des Scanners beziehungsweise der Spiegel äußerst schnell und quasi sprunghaft durchführbar, wodurch ein besonders schnelles Neupositionieren des Laserstrahls und damit des Nahtbeginns der Schweißnaht ermöglicht ist. Dies erlaubt eine besonders niedrige Nebenzeit des Schweißverfahrens, was die gesamte Taktzeit in einem geringen Rahmen hält und damit ein besonders günstiges Verfahren mit sehr geringen Taktzeiten erlaubt.

Insbesondere ist auch die Ausbildung zweier nebeneinander liegender Schweißnähte, die beispielsweise in einem Abstand von 20 bis 30 mm nebeneinander liegen, möglich, da der Laserstrahl, wie beschrieben, besonders schnell umgesetzt und neu positioniert werden kann.

Durch dieses schnelle und flexible Umpositionieren ist es insbesondere auch möglich, die defokussierte Überfahrt vorteilhaft in den Bearbeitungsablauf zu integrieren. Unmittelbar nach der Schweißung wird der Laserstrahl durch den Scanner defokussiert und wird entgegen der Schweißrichtung über die zuvor geschweißte Naht geführt. Dies geschieht während einer kontinuierlichen Bewegung des Scanners durch den Roboter über die Oberfläche der zu schweißenden Metallbauteile.

Das Remote-Laserstrahl-Schweißverfahren ist circa um den Faktor 3 schneller als herkömmliche Verfahren, wobei allerdings kein Schweißzusatzwerkstoff aufgrund der schnellen Neujustierung des Laserstrahls möglich ist.

Das erfindungsgemäße Verfahren erlaubt nun auch im Rahmen des Remote-Laserstrahl-Schweißverfahrens, insbesondere in Zusammenhang mit den Metallbauteilen, die aus Aluminiumlegierungen der Serien 5000 und/oder 7000 ausgebildet sind, eine Darstellung sehr guter Schweißnähte mit einer hohen Funktionalität, und das auch ohne Schweißzusatzwerkstoff.

Dies ist insofern äußerst vorteilhaft, als die Metallbauteile aus den genannten Aluminiumlegierungen eine sehr dünnflüssige Schmelze ausbilden, deren Topographie aufgrund einer hohen Rauheit, Zerklüftung, Scharfkantigkeit etc. nachteilig hinsichtlich der beschriebenen Funktionalität ist. Diese Nachteile sind durch das erfindungsgemäße Verfahren überwunden.

Der beschriebene, erste Aspekt der Erfindung betrifft also das erfindungsgemäße Verfahren, welches es ermöglicht, eine hohe Funktionalität der Metallbauteile auf der dem Energieeintrag, insbesondere mittels des Laserstrahls, zugewandten Oberfläche der Metallbauteile darzustellen. Der zweite Aspekt der Erfindung betrifft nun ein Verfahren, welches es ermöglicht, eine besonders hohe Funktionalität der Oberfläche darzustellen, die dem Energieeintrag, insbesondere mittels des Laserstrahls, abgewandt ist und somit der ersten Oberfläche gegenüberliegt. Die erste Oberfläche wird auch als Nahtoberraupe bezeichnet, während die zweite, der ersten Oberfläche gegenüberliegende Oberfläche, als Nahtunterraupe bezeichnet wird.

Eine vorteilhafte Ausgestaltung der Erfindung betrifft ein Verfahren zum Verschweißen von zwei Metallbauteilen aus einer Aluminiumlegierung, wobei die zu fügenden Metallbauteile in einem Verschweißbereich durch einen Energieeintrag mittels eines Laserstrahls unter Ausbildung einer Schweißnaht aufgeschmolzen werden. Es wird nun ein in Richtung des Energieeintrags, also des Laserstrahls, sich anschließender, nicht durch den Energieeintrag, also den Laserstrahl, aufgeschmolzener Restmaterialdickenbereich der Metallbauteile vorgesehen. Außerdem wird eine aus dem Energieeintrag resultierende Geometrieänderung der dem Energieeintrag, also dem Laserstrahl, abgewandten Oberfläche zumindest eines der Metallbauteile im Bereich der Schweißnaht ermittelt. Danach wird die in Richtung des Energieeintrags, also des Laserstrahls, verlaufende Erstreckung des Restmaterialdickenbereichs in Abhängigkeit von der ermittelten Geometrieänderung ausgebildet.,

Mit anderen Worten bedeutet dies, dass die Metallbauteile nicht komplett durchgeschmolzen werden, sondern der beschriebene Restmaterialdickenbereich vorgesehen wird. Dies vermeidet zum einen eine schlechte, raue und scharfkantige Topographie der dem Energieeintrag abgewandten Oberfläche in Folge eines Aufschmelzens dieser. Nichtsdestotrotz muss die Schweißnaht in Richtung des Energieeintrags so tief ausgebildet werden und damit eine so hohe Eindringtiefe aufweisen, dass eine feste Verbindung der Metallbauteile gegeben ist. Es ist also ein Kompromiss zu schaffen zwischen der Eindringtiefe der Schweißnaht und somit zur Schaffung einer festen Verbindung der Metallbauteile einerseits und der Schaffung einer hohen Oberflächengüte auf der dem Energieeintrag (Laserstrahl) abgewandten Oberfläche der Metallbauteile beziehungsweise im Falle einer Überlappung der Bauteile des unteren der zwei Metallbauteile andererseits.

Auch wenn die Metallbauteile nicht komplett durchgeschmolzen werden, also auch im Falle eines so genannten Nicht-Durchschmelzens, kommt es zu einer Änderung der Geometrie der dem Energieeintrag abgewandten Oberfläche, welche im Folgenden als Unterseite bezeichnet wird. Diese Geometrieänderung, welche auch als Änderung der Topographie oder als Durchdrückung bezeichnet wird, wird ermittelt beziehungsweise erfasst, so zum Beispiel in vorgelagerten Versuchen, und stellt ein Maß dar, wie dicht die durch die Aufschmelzung hergestellte Schweißnaht vor der besagten Unterseite liegt, also wie groß die in Richtung des Energieeintrags verlaufende Erstreckung des Restmaterialdickenbereichs ist. Ebenso ist die Durchdrückung somit ein Maß für die Festigkeit der Verbindung der beiden Metallbauteile.

Durch die Ermittlung beziehungsweise Erfassung der Durchdrückung ist der oben genannte Kompromiss erreichbar. So wird beispielsweise eine Profilhöhe sowie ein Profilwinkel dieser Durchdrückung ermittelt, woraus Rückschlüsse auf die Festigkeit der Verbindung sowie auf die in Richtung des Energieeintrags verlaufende Erstreckung des Restmaterialdickenbereichs zu ziehen sind.

Befindet sich der aufgeschmolzene Bereich der Schweißnaht besonders nah an der Unterseite, so weist die Durchdrückung eine spitze und hohe Topographie auf, während die Topografie einen breiten und flachen Verlauf aufweist, wenn der aufgeschmolzene Bereich der Schweißnaht weiter weg von der Unterseite liegt.

In Abhängigkeit von dieser Geometrieänderung beziehungsweise von dieser Topographie kann nun erfindungsgemäß das Verfahren so eingestellt werden, dass sich eine gewünschte Topographie der Unterseite im Bereich der Schweißnaht einstellt, sodass einerseits eine hohe Oberflächengüte und andererseits eine feste Verbindung zwischen den Metallbauteilen ermöglicht ist.

Ein besonders vorteilhafter Bereich der besagten Profilhöhe liegt dabei bei einschließlich 20 bis einschließlich 100µm, während ein Bereich des besagten Profilwinkeis in einem besonders vorteilhaften Bereich von einschließlich 1 ° bis einschließlich 5° liegt. Insbesondere der Profilwinkel ist ein sehr gutes Maß für die Festigkeit der Verbindung bei gleichzeitiger Realisierung einer sehr guten Oberflächengüte zur Darstellung der beschriebenen Funktionalität auch auf der dem Energieeintrag abgewandten Oberfläche. Liegen beziehungsweise der Profilwinkel und/oder die Profilhöhe in dem jeweiligen Bereich, so sind die zwei Metallbauteile trotz des Nicht-Durchschmelzens fest miteinander verbunden.

Das erfindungsgemäße Verfahren ist insbesondere geeignet für das Verschweißen von Metallbauteilen, die im Wesentlichen aus Aluminiumlegierungen bestehen, insbesondere dann wenn zumindest einer der Fügepartner aus einer Aluminiumlegierungen der Serie 5000 oder 7000 ausgebildet ist, und an Funktionsflanschen miteinander verschweißt werden. Neben der Schaffung der hohen Funktionalität des Verschweißbereichs ist des Weiteren eine Verletzungsgefahr bei nachfolgenden, manuellen Montageoperationen vermieden, da scharfe Kanten, an denen sich ein Monteur schneiden könnte, vermieden bzw. beseitigt werden.

An dieser Stelle sei angemerkt, dass das erfindungsgemäße Verfahren gemäß dem ersten Aspekt der Erfindung ohne Weiteres mit dem erfindungsgemäßen Verfahren des zweiten Aspekts der Erfindung kombinierbar ist zur Darstellung einer hohen Oberflächengüte mit einer hohen Funktionalität sowohl auf der Nahtoberraupe sowie auf der Nahtunterraupe der beiden Metallbauteile.

Zur Erfindung gehört auch eine Verbindungsanordnung mit zwei Metallbauteilen, welche miteinander verschweißt sind, wobei die zwei Metallbauteile durch ein erfindungsgemäßes Verfahren des ersten Aspekts der Erfindung, durch ein erfindungsgemäßes Verfahren des zweiten Aspekts der Erfindung oder durch eine Kombination der erfindungsgemäßen Verfahren der beiden Aspekte miteinander verschweißt sind. Vorteilhafte Ausgestaltungen der Verbindungsanordnungen sind als vorteilhafte Ausgestaltungen des jeweiligen Verfahrens und umgekehrt anzusehen.

Weitere Vorteile, Merkmale und Einzelheiten der Erfindung ergeben sich aus der nachfolgenden Beschreibung mehrerer bevorzugter Ausführungsbeispiele sowie anhand der Zeichnungen. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnungen zeigen in:
- Fig. 1: eine schematische Ansicht zweier Schritte eines Verfahren zum Verschweißen von zwei Metallbauteilen,
- Fig. 2: eine Gegenüberstellung eines Längsschnittes einer Schweißnaht, die durch das Verfahren gemäß Fig. 1 entstanden ist, vor beziehungsweise nach dem zweiten Schritt des Verfahrens gemäß Fig. 1,
- Fig. 3: ein Zusammenhang zwischen einer Eindringtiefe der Schweißnaht, die bei dem Verfahren gemäß Fig. 1 ausgebildet wird, und einer Festigkeit der Verbindung der Metallbauteile, die bei dem Verfahren verschweißt werden,
- Fig. 4: eine Darstellung eines Höhenprofils quer zur Schweißnaht auf der dem Energieeintrag abgewandten Oberfläche, die bei dem Verfahren gemäß Fig. 1 ausgebildet wird,
- Fig. 5: ein Zusammenhang zwischen dem Höhenprofil gemäß Fig. 4 und der Eindringtiefe der Schweißnaht, die bei einem Verfahren gemäß Fig. 1 ausgebildet wird, und
- Fig. 6: ein Zusammenhang zwischen der Festigkeit der Verbindung der Metallbauteile, die durch ein Verfahren gemäß Fig. 1 miteinander verschweißt werden, und dem Höhenprofil gemäß den Figuren 4 und 5.

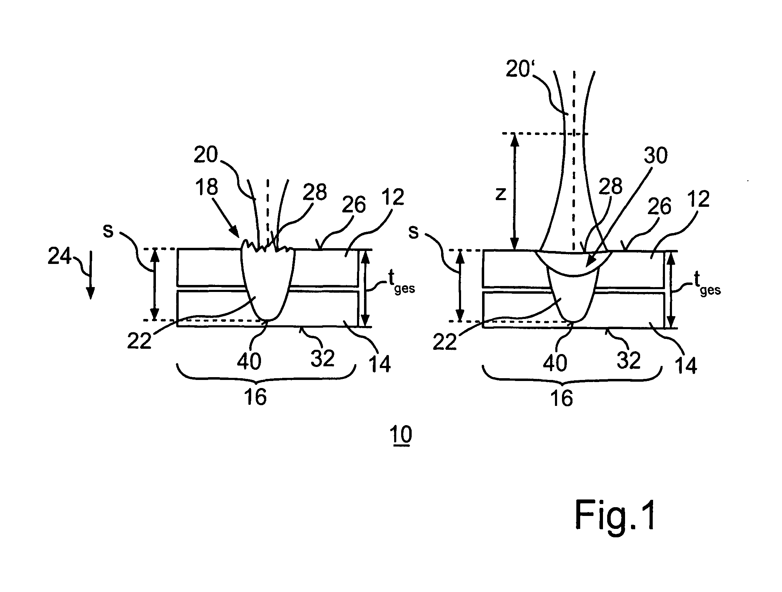

Die Fig. 1 zeigt ein Verfahren zum Verschweißen eines ersten Metallbauteils 12 mit einem zweiten Metallbauteil 14, die aus einer Aluminiumlegierung der Serien 5000 oder 7000 ausgebildet sind. Die Metallbauteile 12 und 14 werden zunächst sich in einem Überlappungsbereich 16 überlappend angeordnet, wodurch also ein Überlappstoß gebildet wird.

Dann werden die zu fügenden Metallbauteile 12 und 14 in einem Verschweißbereich 18 durch einen Energieeintrag mittels eines Laserstrahls 20 unter Ausbildung einer Schweißnaht 22 aufgeschmolzen. Der Laserstrahl 20 ist dabei auf die Schweißnaht 22 beziehungsweise auf eine in Strahlrichtung gemäß einem Richtungspfeil 24 obere Oberfläche 26 des oberen Metallbauteils 12 fokussiert. Das heißt, dass der Abstand z des Brennpunktes des Laserstrahls 20 von der Oberfläche 26 Null Millimeter beträgt.

Wie der Fig. 1 zu entnehmen ist, entsteht dadurch eine ungleichmäßige Oberfläche 28 der Schweißnaht 22, welche als Nahtoberraupe zu bezeichnen ist.

Anschließend wird die Oberfläche 28 der Schweißnaht 22 durch einen weiteren Energieeintrag unter teilweisem Aufschmelzen der Schweißnaht im Bereich der Oberfläche 28 geglättet. Das Bezugszeichen 30 kennzeichnet dabei einen umgeschmolzenen Bereich mit einer gleichmäßigen Nahtoberraupe.

Der weitere Energieeintrag wird mittels eines defokussierten Laserstrahls 20' durchgeführt, dessen Brennpunkt in Strahlrichtung vor der Schweißnaht 22 beziehungsweise vor der Oberfläche 28 positioniert wird. Der Abstand z des Brennpunktes des Laserstrahls 20' beträgt nun beispielsweise 40 mm. Bei dem Laserstrahl 20' kann es sich dabei um den gleichen Laserstrahl 20 handeln, der lediglich defokussiert wird und über die Schweißnaht 22 geführt wird.

Wie der Fig. 1 ebenso zu entnehmen ist, wird bei dem Verfahren 10 eine Eindringtiefe s der Schweißnaht 22 geringer ausgebildet als eine Gesamtmaterialdicke t_{ges} der zu fügenden Metallbauteile 12 und 14. Das bedeutet, dass die Schweißnaht 22 eine in Strahlrichtung gemäß dem Richtungspfeil 24 untere Oberfläche 32 des in Strahlrichtung gemäß dem Richtungspfeil 24 unteren Metallbauteils 14 nicht durchdringt. Es wird also in Richtung des Laserstrahls 20 ein sich an die Schweißnaht 22 anschließender Restmaterialdickenbereich der Metallbauteile 12 und 14 vorgesehen, dessen sich in Richtung des Laserstrahls 20 verlaufende Erstreckung (Dicke) in Abhängigkeit von einer ermittelten, aus dem Energieeintrag mittels des Laserstrahls 20 resultierenden Geometrieänderung der dem Laserstrahl 20 abgewandten Oberfläche 32 des Metallbauteils 14 im Bereich der Schweißnaht 22 ausgebildet wird, was anhand der folgenden Figuren verdeutlicht wird.

Somit ist neben der hohen Oberflächengüte der Oberfläche 26 durch das Glätten der Oberfläche 28 der Schweißnaht 22 auch eine sehr gute Oberflächengüte der Oberfläche 32 realisiert.

Bei dem mittels der Figuren verdeutlichten Verfahren zum Verschweißen der Metallbauteile 12 und 14 werden die Metallbauteile 12 und 14 durch eine Folge von Stepp- beziehungsweise Stichnähten entlang eines Flanschbereiches mittels eines Remote-Laserstrahl-Schweißverfahrens miteinander verbunden, wobei die Metallbauteile 12 und 14 aus einer Aluminiumlegierung der Serie 5000 ausgebildet sind. Der Abstand zwischen den Stichnähten entlang des Flanschbereiches beträgt circa 60 mm von Stichnaht-Mitte zu Stichnaht-Mitte. Die Nahtlänge pro Stichnaht beträgt 30 mm, wobei die Blechdicke der beiden Metallbauteile 12 und 14 jeweils 1,5 mm beträgt. Der zu schweißende Flanschbereich der Metallbauteile wird durch Spannerfinger gegeneinander gedrückt, welche im Flanschbereich zwischen den Stichnähten angeordnet sind.

Der Laserstrahl 20 sowie der defokussierte Laserstrahl 20' werden durch einen Scheiben-Laser erzeugt, welcher eine Leistung von 6 kW und eine Wellenlänge von circa 1µm aufweist. Die Leistung des Lasers wird über ein Lichtleitkabel, welches als Glasfaserkabel mit einem Kerndurchmesser von 200µm ausgebildet ist, zu einem Bearbeitungskopf geführt, der als 3D-Scanner ausgebildet ist. Der Scanner ist an einem Roboterflansch fixiert.

Der Scanner weist eine motorisierte Kollimation zur Bewegung des Laserstrahls 20 beziehungsweise 20' in Strahlrichtung (z-Richtung) auf, wobei diese Bewegung in z-Richtung über eine Weglänge von +/- 70 mm durchgeführt werden kann.

Der Scanner weist weiterhin zwei bewegliche Spiegel zur Ablenkung beziehungsweise Positionierung des Laserstrahls 20 beziehungsweise 20' in zwei Richtungen (x- und y-Richtung) im Scanvolumen auf, welche senkrecht zueinander und jeweils senkrecht zur z-Richtung verlaufen (kartesisches Koordinatensystem). Bei dem Scanvolumen handelt es sich um ein elliptisches Scanvolumen mit den Maßen von circa 320 mm x 190 mm x 70 mm. Die Brennweite der Fokussieroptik des Scanners beträgt 450 mm, und das Abbildungsverhältnis beträgt 3:1. Der Fokusdurchmesser beträgt 600µm.

Bei dem Verfahren zum Verschweißen der Metallbauteile 12 und 14 wird der Werkstoff der Metallbauteile 12 und 14 entsprechend aufgeschmolzen, wobei der Fokus des Laserstrahls 20 bei z = 0 mm bezüglich der Oberfläche 26 des Metallbauteils 12 beziehungsweise des oberen Flansches des Metallbauteils 12 beträgt. Zu Beginn dieser Schweißung beträgt ein Einstrahlwinkel zwischen dem Laserstrahl 20 und der Flächennormalen der Oberfläche 26 0°. Die Schweißgeschwindigkeit, also die Geschwindigkeit, mit der der Laserstrahl 20 über die Oberfläche 26 geführt wird, beträgt 10 m/min, woraus eine reine Schweißdauer für eine Stichnaht von 180 ms resultiert. Bei dieser Geschwindigkeit wird das untere Metallbauteil 14 nicht vollständig durchgeschweißt, es verbleibt der besagte Restmaterialdickenbereich mit einer in Richtung des Laserstahls 20 verlaufenden Erstreckung (Dicke) von 0,2 bis 1 mm.

Trotz dieses Nicht-Durchschweißens bildet sich auf der Oberfläche 32 im Bereich der Schweißnaht 22 eine Geometrieänderung, also eine Änderung der Topographie der Oberfläche 32, welche auch als Durchdrückung bezeichnet wird, bei welcher es sich um eine bleibende, plastische Verformung aufgrund der thermischen Ausdehnung handelt.

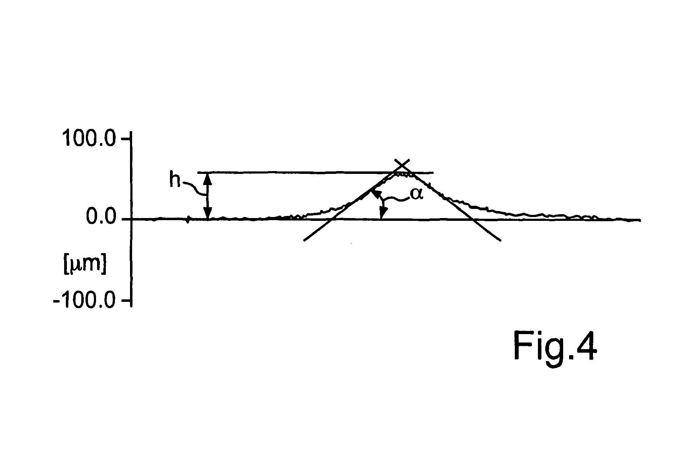

In Zusammenschau mit Fig. 4 beträgt eine Profilhöhe dieser Durchdrückung circa 20 bis 100µm, wobei ein Profilwinkel der Durchdrückung circa 0,5 bis 3° beträgt. Die Profilhöhe und der Profilwinkel sind dabei ein gutes Maß für die in Richtung des Laserstrahls 20 verlaufende Erstreckung des Restmaterialdickenbereichs, also für die nichtaufgeschmolzene Restmaterialstärke und damit auch ein Maß für die Eindringtiefe s der Schweißnaht 22 beziehungsweise indirekt für die Festigkeit der Schweißnaht 22 und damit für die Verbindung der Metallbauteile 12 und 14.

Unmittelbar nach dem Ausbilden der Schweißnaht 22 wird der Laserstrahl 20 um + 40 mm defokussiert, woraus der bereits genannte Abstand z = 40 mm des Brennpunkts des Laserstrahls 20' zur Oberfläche 26 resultiert. Dadurch vergrößert sich ein Strahlfleckdurchmesser des Laserstrahls 20 beziehungsweise 20' auf der Oberfläche 26 cirka um den Faktor 3 im Vergleich zum Strahlfleckdurchmesser des fokussierten Laserstrahls 20. Es wird nun eine defokussierte Überfahrt der auf die beschriebene Art und Weise ausgebildeten Schweißnaht 22 in entgegen gesetzter Richtung der vorigen Bewegungsrichtung zum Ausbilden der Schweißnaht 22 durchgeführt, wodurch die Oberfläche 28 beziehungsweise ein Oberflächenbereich bis circa in eine Tiefe von 0,1 bis 1 mm der zuvor geschweißten und größtenteils schon erstarrten Schweißnaht 22 wieder aufgeschmolzen und dabei geglättet beziehungsweise eingeebnet wird. Die defokussierte Überfahrt erfolgt dabei mit einer Leistung des Lasers von 6 kW und einer Geschwindigkeit von circa 18 m/min, woraus eine Dauer für die defokussierte Überfahrt von 100 ms resultiert.

Nach der defokussierten Überfahrt wir der Laserstrahl 20' in wenigen Millisekunden auf den Beginn der nächsten Stichnaht gelenkt, woraufhin die nächste Stichnaht ausgebildet wird. Somit wechseln Schweißungen, also fokussierte Überfahrten, und defokussierte Überfahrten zum Glätten der entsprechenden Oberflächen 28 miteinander ab.

Die dafür erforderliche Bewegung der Spiegel des Scanners sowie der motorisierten Kollimation wird durch eine Steuerrechnereinheit ermittelt, und zwar unter Berücksichtigung der zuvor justierten beziehungsweise eingelernten (engl. teached) Positionen der Stichnähte, von programmierten Schweißparametern und unter Berücksichtigung der Bewegung der Bearbeitungsoptik beziehungsweise des Scanners, welcher an einem Roboter zur Bewegung gehalten sind.

Die Robotergeschwindigkeit zur Grobausrichtung des Laserstrahls 20 beziehungsweise 20' beträgt dabei circa 12,5 m/min und liegt damit deutlich über der genannten Geschwindigkeit des Laserstrahls 20 zum Ausbilden der Schweißnaht 22 von 10 m/min, was durch das schnelle Springen des Laserstrahls 20 von einer Stichnaht zur nächsten Stichnaht infolge der schnellen Bewegung der Spiegel des Scanners ermöglicht ist.

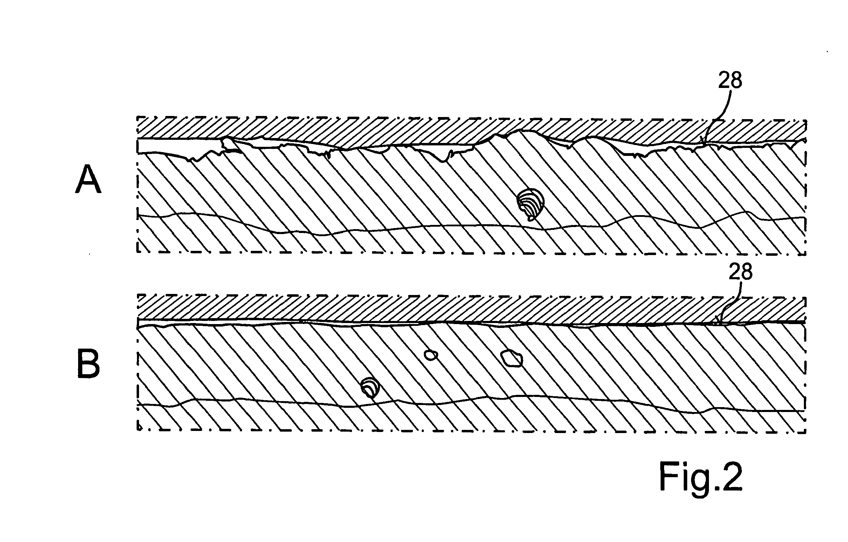

Die Fig. 2 zeigt gemäß Darstellung A einen Längsschnitt durch die Schweißnaht 22 vor dem Glätten der Oberfläche 28. Zu sehen ist eine ungleichmäßige Oberfläche 28 mit einer Vielzahl von scharfen Kanten.

Dementsprechend zeigt die Fig. 2 gemäß Darstellung B einen Längsschnitt durch die Schweißnaht 22 nach dem Glätten durch den weiteren Energieeintrag mittels des defokussierten Laserstrahls 20'. Die Oberfläche 28 ist wesentlich glatter und weist keine scharfen Kanten mehr auf.

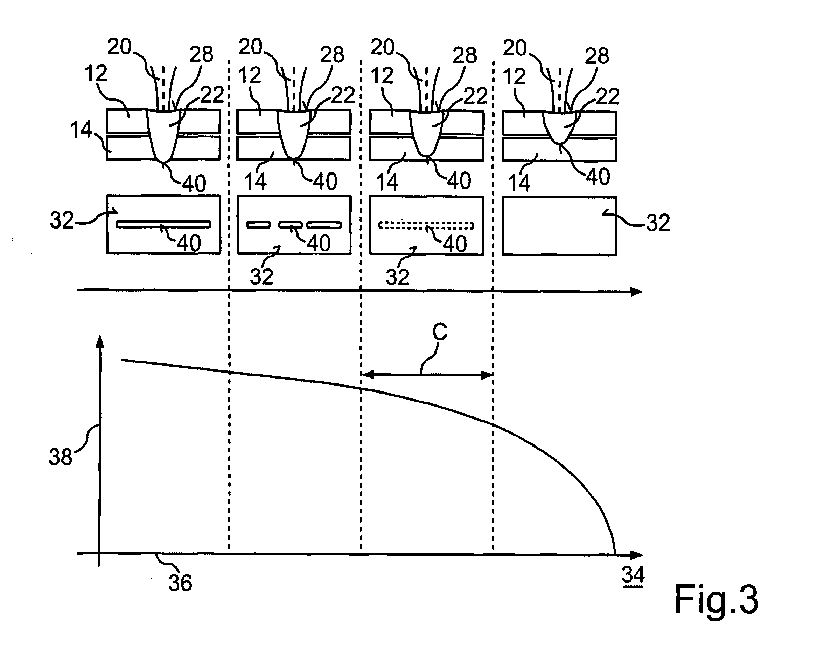

Die Fig. 3 zeigt ein Diagramm 34, auf dessen Abszisse 36 eine Schweißgeschwindigkeit aufgetragen ist. Die Schweißgeschwindigkeit bezieht sich dabei auf die Geschwindigkeit, mit der der Laserstrahl 20 zur Ausbildung der Schweißnaht 22 relativ zu den Metallbauteilen 12 und 14 bewegt wird. Auf der Ordinate 38 des Diagramms 34 ist die Festigkeit der Verbindung der Metallbauteile 12 und 14 dargestellt.

Des Weiteren ist in der Fig. 3 sowohl der aus Fig. 1 bekannte Querschnitt der Schweißnaht 22 sowie der Metallbauteile 12 und 14 dargestellt sowie eine Draufsicht auf die in Strahlrichtung untere Oberfläche 32 des in Strahlrichtung unteren Metallbauteils 14. Kann die Oberfläche 28 der Schweißnaht 22 als Nahtoberraupe bezeichnet werden, so kann die gegenüberliegende Oberfläche der Schweißnaht 22 als Nahtunterraupe 40 bezeichnet werden.

Wie zu sehen ist, sinkt mit zunehmender Schweißgeschwindigkeit die Eindringtiefe s (Fig. 1) der Schweißnaht 22 und somit auch die Eindringtiefe der Schweißnaht 22 in das untere Bauteil 14. Bei niedrigen Schweißgeschwindigkeiten 36 durchdringt gar die Schweißnaht das untere Metallbauteil 14, weswegen die Nahtunterraupe 40 auf der Oberfläche 32 zu sehen ist. Daraus resultiert zwar eine hohe Festigkeit 38 der Verbindung der Metallbauteile 12 und 14, allerdings auch eine schlechte Oberflächengüte der Oberfläche 32, wodurch in dem Verschweißbereich 18 beispielsweise keine Dichtungen oder dergleichen mehr angebracht werden können. Diese würden durch die scharfen Kanten (Fig. 2) beschädigt werden.

Daher ist ein Kompromiss anzustreben aus der Festigkeit 38 und der Eindringtiefe s der Schweißnaht 22 beziehungsweise der Schweißgeschwindigkeit 36.

Ein Bereich C in dem Diagramm 34 stellt dabei einen optimalen Schweißgeschwindigkeitsbereich dar, in welchem die Festigkeit 38 der Verbindung der Metallbauteile 12 und 14 ausreichend groß ist, sowie auch die Oberfläche 32 eine gewünscht hohe Oberflächengüte aufweist, da ein Durchdringen, also eine Durchschweißung, des zweiten Metallbauteil 14 bis zu dessen Oberfläche 32 vermieden ist. Dieses Nicht-Durchschweißen ist auch als Einschweißen zu bezeichnen.

Die Fig. 4 zeigt ein typisches Höhenprofil quer zur Nahtlängsrichtung gemessen auf der Oberfläche 32 bei einem solchen Einschweißen in das untere Metallbauteil 14, also bei einer Vermeidung eines kompletten Durchdringens der Schweißnaht 22 durch dieses. Eine Profilhöhe ist dabei als h bezeichnet, und ein Profilwinkel mit dem Winkel α.

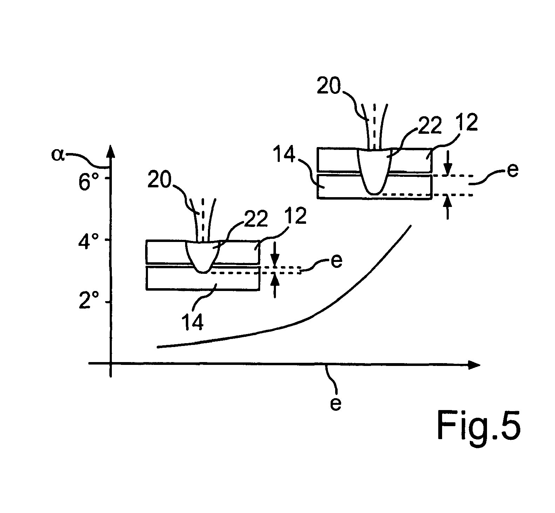

In Zusammenschau mit Fig. 5 bedeutet dies, dass bei steigender Eindringtiefe s der Schweißnaht 22 und damit mit steigender Einschweißtiefe e der Schweißnaht 22 in das untere Metallbauteil 14 auch der Profilwinkel α steigt.

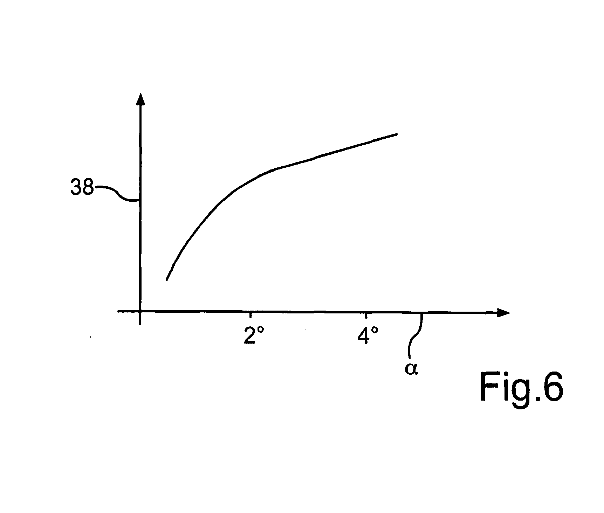

In weiterer Zusammenschau der Fig. 6 ist der Zusammenhang zwischen dem Profilwinkel α und der Festigkeit 38 der Verbindung der Metallbauteile 12 und 14 verdeutlicht. Mit steigendem Profilwinkel α steigt auch die Festigkeit 38. Jedoch ist der Verlauf der Festigkeit 38 über dem Profilwinkel a degressiv, das heißt ab einem gewissen Profilwinkel α nimmt die Festigkeit 38 nicht mehr bedeutsam zu.

Im Umkehrschluss bedeutet dies, dass die Bildung eines gewissen Profilwinkels α, der in bekannter Weise mit der Einschweißtiefe e beziehungsweise der Eindringtiefe s der Schweißnaht 22 zusammenhängt, ausreicht, und daher auch eine bestimmte Eindringtiefe s der Schweißnaht 22 ohne Durchdringen des zweiten Metallbauteils 14 ausreicht, um einerseits eine sehr gute Oberflächengüte der unteren Oberfläche 32 sowie gleichzeitig eine besonders feste Verbindung zwischen den Metallbauteilen 12 und 14 darzustellen.

### Bezugszeichenliste

| | |
|---|---|
| 10 | Verfahren |
| 12 | Metallbauteil |
| 14 | Metallbauteil |
| 16 | Überlappungsbereich |
| 18 | Verschweißbereich |
| 20, 20' | Laserstrahl |
| 22 | Schweißnaht |
| 24 | Richtungspfeil |
| 26 | Oberfläche |
| 28 | Oberfläche |
| 30 | Bereich |
| 32 | Oberfläche |
| 34 | Diagramm |
| 36 | Schweißgeschwindigkeit |
| 38 | Festigkeit |
| 40 | Nahtunterraupe |
| A | Darstellung |
| B | Darstellung |
| C | Bereich |
| e | Einschweißtiefe |
| h | Profilwinkel |
| s | Eindringtiefe |
| t_{ges} | Gesamtmaterialdicke |
| z | Abstand |
| A | Profilwinkel |

## Patentansprüche

1. Verfahren (10) zum Verschweißen von zwei Metallbauteilen (12, 14) aus Aluminiumlegierungen mit den Schritten:
- Aufschmelzen der zu fügenden Metallbauteile (12, 14) in einem Verschweißbereich (18) durch einen Energieeintrag mittels eines Laserstrahls (20) unter Ausbildung einer Schweißnaht (22),
- Glätten der Oberfläche (28) der Schweißnaht (22) durch einen weiteren Energieeintrag unter teilweisem Aufschmelzen der Schweißnaht (22) im Bereich der Oberfläche (28)
**gekennzeichnet dadurch**
**dass** der weitere Energieeintrag mittels eines defokussierten Laserstrahls (20') durchgeführt wird, dessen Brennpunkt in Strahlrichtung (24) vor oder hinter der Oberfläche (28) der Schweißnaht (22) positioniert wird;
wobei der defokussierte Laserstrahl (20') und die Flächennormale einer Oberfläche (26, 28) der zwei Metallbauteile (12, 14), auf welche der Laserstrahl auftrifft, einen Winkel von größer oder gleich 5 Grad einschließen.

2. Verfahren nach Anspruch 1,
**dadurch gekennzeichnet, dass**
eine von dem defokussierten Laserstrahl (20') mit Energie beaufschlagte Fläche 4 bis 16 mal, insbesondere 9 mal, größer ist als eine von dem fokussierten Laserstrahl (20) mit Energie beaufschlagte Fläche.

3. Verfahren nach einem der Ansprüche 1 bis 2,
**dadurch gekennzeichnet, dass**
der weitere Energieeintag mittels des defokussierten Laserstrahls (20') unmittelbar nach dem ersten Schritt, in einem Zeitabstand von weniger als 100 ms, insbesondere in einem Zeitabstand von weniger als 10 ms, erfolgt und die defokussierte Überfahrt mit Hilfe eines 3D-Scanners in entgegengesetzter Richtung zur der im ersten Schritt erfolgten Schweißung durchgeführt wird.

4. Verfahren (10) zum Verschweißen von zwei Metallbauteilen (12, 14) aus Aluminiumlegierungen, nach einem der vorhergehenden Ansprüche, mit den zusätzlichen Schritten :
- Vorsehen eines in Richtung des Energieeintrags, insbesondere des Laserstrahls (20), sich an die Schweißnaht (22) anschließenden, nicht durch den Energieeintrag, insbesondere den Laserstrahl (20), aufgeschmolzenen Restmaterialdickenbereichs der Metallbauteile,
- Ermitteln einer aus dem Energieeintrag resultierenden Geometrieänderung der dem Energieeintrag, insbesondere dem Laserstrahl (20), abgewandten Oberfläche (32) zumindest eines der Metallbauteile (12, 14) im Bereich der Schweißnaht (22),
- Ausbilden der in Richtung des Energieeintrags, insbesondere des Laserstrahls (20), verlaufenden Erstreckung des Restmaterialdickenbereichs in Abhängigkeit von der ermittelten Geometrieänderung.

5. Verfahren (10) nach einem der vorhergehenden Ansprüche,
**dadurch gekennzeichnet, dass**
die Metallbauteile (12, 14) vor dem Verschweißen sich in einem Überlappungsbereich (26) überlappend angeordnet werden und der Verschweißbereich (18) in dem Überlappungsbereich (16) vorgesehen wird.

6. Verfahren nach einem der vorhergehenden Ansprüche,
**dadurch gekennzeichnet, dass**
als zwei Metallbauteile (12, 14) Aluminiumlegierungen verschweißt werden, wobei zumindest einer der Fügepartner aus einer Aluminiumlegierung der Serie 5000 oder 7000 ausgebildet ist.

## Claims

1. Method (10) for welding two metal components (12, 14) made of aluminium alloys, the method comprising the steps of:
- fusing the metal components (12, 14) to be joined in a welding region by introducing energy by means of a laser beam (20) while forming a weld seam (22),
- smoothing the surface (28) of the weld seam (22) by introducing further energy while partially fusing the weld seam (22) in the region of the surface (28),
**characterised in that**
the further energy is introduced by means of a defocused laser beam (20'), the focus of which is positioned in front or behind the surface (28) of the weld seam (22) in the beam direction (24);
wherein the defocused beam (20') and the face normal of a surface (26, 28) of the two metal components (12, 14) on which the laser beam impinges enclose an angle greater than or equal to 5 degrees.

2. Method according to claim 1,
**characterised in that**
an area to which the defocused beam (20') applies energy is 4 to 16 times, in particular 9 times, as large as an area to which the focused laser beam (20) applies energy.

3. Method according to claims 1 to 2,
**characterised in that**
the further energy is introduced by means of the defocused beam (20') immediately after the first step at a time interval of less than 100 ms, in particular a time interval of less than 10 ms, and **in that** the defocused passage is carried out using a 3D scanner in the opposite direction to the welding process of the first step.

4. Method (10) according to any of the preceding claims for welding two metal components (12, 14) made of aluminium alloys, the method comprising the additional steps of:
- provision of a residual material thickness region of the metal components which adjoins the weld seam (22) in the direction of the energy introduction, in particular of the laser beam (20) and which is not fused by the energy introduction, in particular the laser beam (20),
- determination of a geometry change resulting from the energy introduction in that surface (32) of at least one of the metal components (12, 14) which is remote from the energy introduction, in particular from the laser beam (20), in the region of the weld seam (22),
- formation of the dimension of the residual material thickness region which extends in the direction of the energy introduction, in particular of the laser beam (20), as a function of the determined geometry change.

5. Method (10) according to any of the preceding claims,
**characterised in that**
prior to the welding process, the metal components (12, 14) are arranged to overlap in an overlapping region (26), and **in that** the welding region (18) is provided in the overlapping region (26).

6. Method according to any of the preceding claims,
**characterised in that**
the two metal components (12, 14) welded are aluminium alloys, at least one of the parts to be joined being made of an aluminium alloy of the 5000 or 7000 series.

## Revendications

1. Procédé (10) pour souder deux composants métalliques (12, 14) à base d'alliages d'aluminium comprenant les étapes suivantes :
- fusion des composants métalliques (12, 14) à assembler dans une zone de soudure (18) par un apport d'énergie au moyen d'un faisceau laser (20) en formant un cordon de soudure (22),
- lissage de la surface (28) du cordon de soudure (22) par un nouvel apport d'énergie avec fusion partielle du cordon de soudure (22) dans la zone de la surface (28)
**caractérisé en ce que** le nouvel apport d'énergie s'effectue au moyen d'un faisceau laser (20') défocalisé, dont le foyer est positionné dans le sens du faisceau (24) en amont ou en aval de la surface (28) du cordon de soudure (22), le faisceau laser (20') défocalisé et la perpendiculaire d'une surface (26, 28) des deux composants métalliques (12, 14), sur lesquels le faisceau laser arrive, formant un angle supérieur ou égal à 5 degrés.

2. Procédé selon la revendication 1, **caractérisé en ce qu'**une surface alimentée en énergie par le faisceau laser (20') défocalisé est 4 à 16 fois supérieure à une surface alimentée en énergie par le faisceau laser (20) focalisé.

3. Procédé selon l'une quelconque des revendications 1 à 2, **caractérisé en ce que** le nouvel apport d'énergie s'effectue au moyen du faisceau laser (20') défocalisé directement après la première étape, dans un laps de temps inférieur à 100 ms, en particulier dans un espace temps inférieur à 10 ms, et le passage est réalisé à l'aide d'un scanneur 3D dans la direction opposée à la soudure réalisée à la première étape.

4. Procédé (10) pour souder deux composants métalliques (12, 14) à base d'alliages d'aluminium selon l'une quelconque des revendications précédentes, comprenant les étapes suivantes :
- prévoir une zone d'épaisseur de matériau restant fondue des composants métalliques dans la direction de l'apport d'énergie, en particulier du faisceau laser (20), rattachée au cordon de soudure (22) non pas par l'apport d'énergie, en particulier le faisceau laser (20),
- déterminer une modification de géométrie résultante de l'apport d'énergie de la surface opposée (32) à l'apport d'énergie, en particulier le faisceau laser (20), d'au moins un des composants métalliques (12, 14) dans la zone du cordon de soudure (22),
- former l'étendue de la zone d'épaisseur de matériau restant dans la direction de l'apport d'énergie, en particulier du faisceau laser (20), en fonction de la modification de la géométrie déterminée.

5. Procédé (10) selon l'une quelconque des revendications précédentes, **caractérisé en ce que** les composants métalliques (12, 14) avant le soudage se superposent dans une zone de superposition (26) et la zone de soudure (18) est prévue dans la zone de superposition (16).

6. Procédé selon l'une quelconque des revendications précédentes, **caractérisé en ce que** des alliages en aluminium sont soudés comme deux composants métalliques (12, 14), au moins un des partenaires d'assemblage étant conçu à base d'un alliage d'aluminium de la série 5 000 ou 7 000.
